Europäisches Patentamt

European Patent Office

Office européen des brevets

(19)

(11) Numéro de publication: **0 147 281**
**B1**

(12) **FASCICULE DE BREVET EUROPEEN**

(45) Date de publication du fascicule du brevet:
**01.06.88**

(21) Numéro de dépôt: **84402525.4**

(22) Date de dépôt: **06.12.84**

(51) Int. Cl.⁴: **G 05 D 7/01,** F 15 C 1/16,
G 21 C 15/02

(54) **Dispositif de régulation du débit d'un courant de fluide dont la pression d'alimentation est variable.**

(30) Priorité: **09.12.83 FR 8319733**

(43) Date de publication de la demande:
**03.07.85 Bulletin 85/27**

(45) Mention de la délivrance du brevet:
**01.06.88 Bulletin 88/22**

(84) Etats contractants désignés:
**BE DE GB IT NL**

(56) Documents cités:
**FR - A - 1 481 970**
**FR - E - 89 165**
**GB - A - 2 017 385**
**US - A - 3 424 182**
**US - A - 4 164 961**

(73) Titulaire: **NOVATOME, La Boursidière R.N. 186,**
**F-92357 Le Plessis Robinson (FR)**

(72) Inventeur: **Pradal, Louis, 18 rue St Sidoine, F-69003 Lyon**
**(FR)**
Inventeur: **Robert, Joel, Résidence les Sablons 10 rue**
**des Pliades, F-78130 Les Mureaux (FR)**
Inventeur: **Chiarelli, Gérard, 5 Rue Jules Verne,**
**F-69330 Jonage (FR)**

(74) Mandataire: **Polus, Camille et al, c/o Cabinet**
**Lavoix 2, Place d'Estienne d'Orves, F-75441 Paris**
**Cedex 09 (FR)**

## Description

L'invention concerne un dispositif de régulation du débit d'un courant de fluide dont la pression d'alimentation est variable.

Dans l'exploitation des réacteurs nucléaires à neutrons rapides refroidis par du sodium liquide, il est nécessaire de remplacer certains assemblages du cœur qui sont devenus défectueux ou dont le combustible est usé après un certain temps de fonctionnement dans le réacteur. Les assemblages usés ou défectueux doivent être évacués vers une usine de retraitement où l'on effectue en particulier la récupération du matériau combustible régénéré. Avant d'effectuer le transport des assemblages usagés vers l'usine de retraitement, il est nécessaire de les laisser se désactiver dans une zone de stockage pendant une durée relativement longue, puisqu'ils possèdent une activité résiduelle importante qui ne décroît que lentement dans le temps.

Pour éviter des investissements importants et les risques inhérents à un stockage de désactivation des assemblages à l'extérieur de la cuve du réacteur, on a proposé de stocker les assemblages combustibles usagés dans la cuve du réacteur elle-même, autour du cœur, dans le sodium de refroidissement du réacteur.

Les assemblages usagés prélevés dans le cœur sont disposés verticalement sur le support de cœur, comme les assemblages actifs du réacteur, suivant une couronne périphérique située à l'extérieur d'une zone de couverture servant d'écran au rayonnement et disposée elle-même autour de la partie active du cœur. Cette couche de couverture est constituée par des assemblages renfermant de l'acier ou un matériau plus absorbant qui limitent fortement le flux neutronique provenant du cœur, si bien que les assemblages usagés ne sont pas réactivés de manière significative, dans leur zone de stockage.

Les assemblages usagés produisent cependant une certaine quantité de chaleur qui dépend en particulier de l'intensité de la réactivation, donc du flux neutronique résiduel dans la zone périphérique de stockage.

Il est donc nécessaire d'alimenter les assemblages usagés en sodium de refroidissement, suivant un processus comparable au mode de refroidissement des assemblages actifs. Les assemblages actifs sont refroidis chacun par un courant de sodium liquide entrant dans l'assemblage par sa partie inférieure et le traversant suivant toute sa longueur.

Le débit de refroidissement des assemblages combustibles actifs dépend de leur position dans le cœur du réacteur, et lorsque la perte de charge propre de l'assemblage n'est pas suffisante pour imposer le débit de sodium souhaité, on utilise un système régulateur de débit formé par une succession de diaphragmes placés dans la partie basse de l'assemblage. Mais pour un assemblage usagé, la perte de charge d'un tel système régulateur serait dans tous les cas largement insuffisante, étant donné la faible puissance dégagée par les assemblages usagés dans leurs emplacements de stockage interne et donc le faible débit nécessaire à leur refroidissement. C'est pourquoi on utilise un dispositif créant une perte de charge supplémentaire dans la chandelle (ou tube support) de l'assemblage constitué par une succession de diaphragmes. Mais si ce système assure bien le débit minimal de refroidissement nécessaire pour le cas incidentel de fonctionnement le plus sévère du réacteur, au régime nominal, l'assemblage est encore traversé par un débit très supérieur au débit correspondant au prélèvement de chaleur souhaitable.

Dans le cas du fonctionnement du réacteur à sa puissance nominale, le débit de sodium du stockage interne est beaucoup trop élevé, ce qui se traduit par une perte d'énergie de pompage et surtout par une diminution de la température du sodium à la sortie du cœur, donc par une baisse importante du rendement du réacteur nucléaire.

D'autre part une alimentation des assemblages usagés distincte de l'alimentation des assemblages actifs conduit à une complication importante de la structure interne du réacteur et à une augmentation du coût du réacteur.

Il serait donc intéressant d'utiliser un dispositif de régulation de débit plus performant que le dispositif actuel comportant des diaphragmes successifs, diminuant considérablement le débit au régime nominal dans les assemblages en stockage interne, et assurant en toutes circonstances le débit de refroidissement nécessaire au régime incidentel le plus sévère de fonctionnement du réacteur. Le régime incidentel le plus sévère se traduit par une augmentation de la température d'entrée du sodium et une forte baisse de la pression d'alimentation.

Les limiteurs régulateurs de débit connus actuellement sont d'une structure compliquée et possèdent des pièces mobiles qui sont susceptibles de fonctionner de façon défectueuse dans l'ambiance du réacteur, dans le sodium liquide à haute température. On connaît également des procédés et des dispositifs de régulation de débit qui ne nécessitent pas l'utilisation de pièces mobiles. De tels dispositifs peuvent fonctionner par séparation du courant initial de fluide régulé en un courant principal et en un courant de commande sensiblement coaxiaux, se propageant dans la même direction, le courant principal entourant le courant de commande dans lequel on crée une perte de charge. Le courant de commande est ensuite dirigé vers le courant principal sur lequel il agit de façon à réguler le débit de fluide par interaction directe. En choisissant le débit, la pression et la direction du courant de commande au moment où on lui fait rencontrer le courant principal, on peut obtenir une limitation et une régulation du débit du courant à la sortie du régulateur.

Dans le FR-E-89 165, le courant de fluide est séparé en un courant principal périphérique et en un courant central de commande grâce à un tube disposé coaxialement par rapport au conduit dans lequel circule le fluide et constituant une chambre cylindrique percée d'ouvertures débouchant dans l'espace périphérique du conduit. Le conduit est réalisé sous forme d'un convergent-divergent et les ouvertures débouchent au niveau du col de ce convergent-divergent.

Dans le FR-A-1 481 970, le courant principal est dévié à l'entrée d'un vortex par un courant de commande sur lequel on a créé une perte de charge de type linéaire.

De tels dispositifs ne sont cependant pas utilisables dans le cas de la limitation de débit dans les assemblages usagés d'un réacteur nucléaire à neutrons rapides. En effet, les caractéristiques de fonctionnement et la structure de ces régulateurs sont incompatibles avec une utilisation dans un réacteur à neutrons rapides qui demande d'une part l'obtention d'un débit faiblement croissant lorsque la pression de pompage connaît elle-même une augmentation très importante et d'autre part une structure extrêmement simple et extrêmement résistante facilement logeable dans un conduit de diamètre limité.

De façon plus générale, on ne connaissait pas de dispositif de limitation et de régulation du débit d'un courant de fluide par séparation du courant initial en deux courants et interaction de ces deux courants qui permette d'obtenir une très forte limitation et une très bonne régulation du débit malgré une pression d'alimentation du fluide variable dans de très grandes proportions.

Le but de l'invention est donc de proposer un dispositif de régulation du débit d'un courant de fluide à l'intérieur d'un conduit ayant une extrémité d'entrée et une extrémité de sortie, comportant un tube fixé coaxialement à l'intérieur du conduit et débouchant dans une chambre cylindrique disposée dans le conduit coaxialement par rapport à ce conduit et ménageant des canaux de sortie pour diriger le fluide pénétrant dans la chambre cylindrique, à la sortie du tube sous forme d'un courant de commande qui est mis en contact avec le courant principal du fluide circulant dans le conduit à la périphérie du tube, vers un espace périphérique communiquant avec la sortie du conduit et situé entre la surface latérale externe de la chambre cylindrique et la surface latérale interne du conduit, dispositif qui permet une limitation très importante du débit et une très bonne régulation de ce débit quelles que soient les variations de la pression et qui ne nécessite que des moyens simples de mise en œuvre, facilement logeables dans un conduit de diamètre limité.

Dans ce but:

au moins deux plaques transversales annulaires sont fixées par leur bord externe sur la surface intérieure du conduit, dans des positions espacées axialement et percées chacune d'ouvertures calibrées entre leur ouverture centrale et leur périphérie fixée sur le conduit, le tube est fixé dans le conduit à l'intérieur des ouvertures circulaires centrales des plaques et comporte une structure formant des canaux longitudinaux de faible section, une perte de charge de type linéaire étant ainsi créée dans ledit courant de commande et une perte de charge de type quadratique étant ainsi créée dans ledit courant principal, la chambre cylindrique est délimitée à sa périphérie par un anneau coaxial par rapport au conduit et les canaux traversent l'anneau, chacun dans une direction inclinée par rapport à la direction radiale Or du conduit joignant le centre du conduit à la sortie du canal sur la périphérie de l'anneau, de façon à diriger le fluide pénétrant dans l'espace périphérique à la sortie de la chambre cylindrique suivant un vortex dont l'axe est confondu avec l'axe du conduit et du tube.

Afin de bien faire comprendre l'invention, on va maintenant décrire à titre d'exemple non limitatif, en se référant aux figures jointes en annexe, un mode de réalisation d'un dispositif suivant l'invention et l'utilisation du dispositif pour la limitation et la régulation d'un courant de sodium liquide dans des assemblages usagés d'un réacteur nucléaire à neutrons rapides.

La figure 1 est une vue en coupe par un plan vertical de symétrie, suivant BB de la figure 2, d'un dispositif de régulation de débit suivant l'invention.

La figure 2 est une vue en coupe suivant AA de la figure 1.

La figure 3 est un diagramme donnant les variations du débit d'un courant de sodium liquide en fonction de la perte de charge, dans le regulateur représenté aux figures 1 et 2.

La figure 4 est une vue en coupe par un plan vertical d'un support d'assemblage combustible d'un réacteur nucléaire à neutrons rapides contenant un régulateur de débit suivant l'invention.

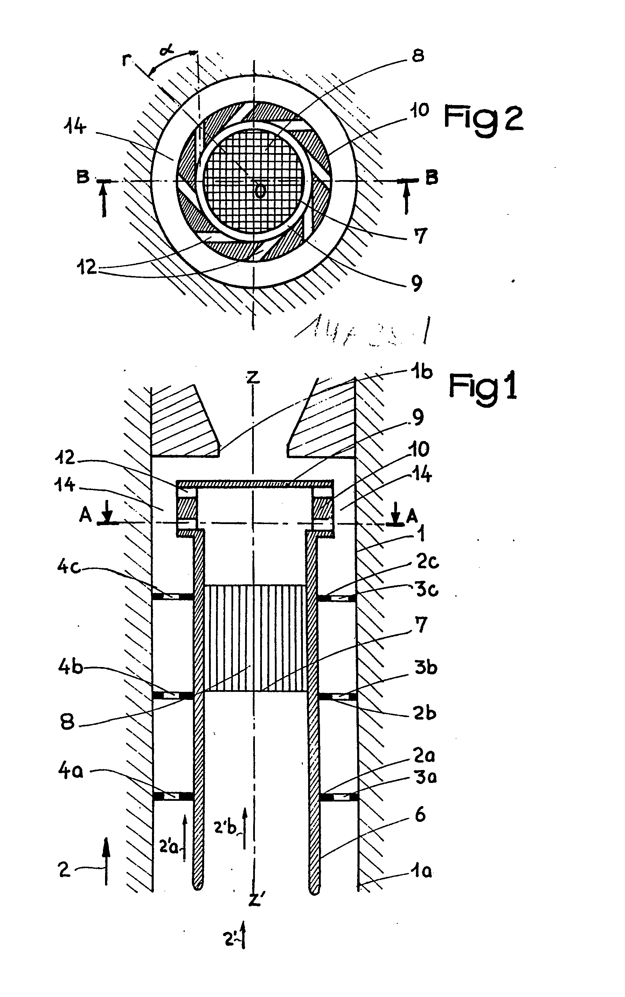

Sur la figure 1, on voit un conduit 1 disposé avec son axe vertical dans un écoulement de fluide dirigé verticalement et de bas en haut suivant la flèche 2. Le conduit 1 canalise un courant de fluide qui pénètre dans le conduit 1 par son extrémité inférieure d'entrée 1a, le courant de fluide étant évacué à la sortie du dispositif par l'extrémité de sortie 1b de diamètre plus faible que l'extrémité d'entrée 1a.

A l'intérieur du conduit, trois plaques 2a, 2b et 2c sont disposées transversalement et maintenues à leur périphérie contre la surface intérieure du conduit 1, par exemple par soudage.

Les plaques 2a, 2b et 2c comportent des séries d'ouvertures sensiblement alignées telles que 3a, 3b, 3c et 4a, 4b, 4c.

De telles plaques percées disposées transversalement à un écoulement créent une perte de charge quadratique dans cet écoulement, c'est-à-dire une perte de charge proportionnelle au carré de la pression ou du débit de cet écoulement.

Les plaques 2 sont également percées à leur partie centrale par des ouvertures circulaires dont les centres sont alignés sur l'axe ZZ' vertical du conduit 1. Ces ouvertures circulaires de grand diamètre permettent le passage et la fixation d'un tube 6 disposé coaxialement au conduit 1.

A l'intérieur du tube 6 et sur une partie de sa longueur, est fixée une structure 7 séparant l'espace intérieur du tube 6 en canaux longitudinaux 8 de faible dimension transversale. La structure 7 peut être constituée par un cylindre percé de canaux de direction axiale et de faible diamètre.

Une telle structure 7 à canaux longitudinaux de faible dimension transversale crée une perte de charge linéaire pour un écoulement en circulation dans le tube 6 dans la direction de l'axe ZZ'. Une telle perte de charge est proportionnelle au débit du courant de fluide passant dans le tube 6.

Le tube 6 débouche à sa partie supérieure dans une enveloppe cylindrique 9 fermée à sa périphérie par un anneau 10 traversé par des perçages 12 horizontaux et inclinés par rapport à la direction radiale (tel que Or par exemple) d'un angle, constant.

Les canaux 12 débouchent à la surface latérale de l'anneau 10, dans la zone périphérique supérieure 14 du conduit 1.

Le courant initial de fluide entrant par l'extrémité la du conduit 1 suivant la flèche 2' se sépare en deux courants de même direction et coaxiaux, l'un de ces courants passant dans le tube 6 et l'autre courant dans la zone annulaire comprise entre la surface interne du conduit 1 et la surface externe du tube 6.

Le courant 2'a passant dans la zone annulaire périphérique entourant le tube 6 est appelé courant principal.

Le courant 2'b constitue le courant de commande du régulateur.

Pendant la première partie de la traversée du dispositif, les courants 2'a et 2'b se déplacent suivant la même direction, le courant 2'a subissant une perte de charge de type quadratique au cours de la traversée des plaques 2a, 2b, 2c et le courant 2'b, une perte de charge de type linéaire pendant la traversée de la structure 7.

A la sortie du tube 6, le courant 2'b pénètre dans l'espace intérieur de l'enveloppe cylindrique 9 dont la paroi transversale supérieure dévie le courant 2'b vers la périphérie de l'enveloppe 9 traversée par les perçages inclinés 12.

Le courant 2'b sortant par les perçages 12 génère un vortex d'axe ZZ' qui entraine en rotation le courant principal 2'a qui a traversé les plaques percées 2, dans l'espace annulaire périphérique supérieur 14 du conduit 1.

Le courant 2'b sous forme de vortex rencontrant le courant principal 2'a agit sur celui-ci et limite le débit total passant à travers le rétrécissement 1b en augmentant la perte de charge globale du dispositif.

L'action du courant de commande 2'b sous forme de vortex, sur le courant 2'a par contact direct entre ces deux courants dépend de la pression et du débit du courant de commande et donc de la pression et du débit initial du fluide à l'entrée du conduit 1.

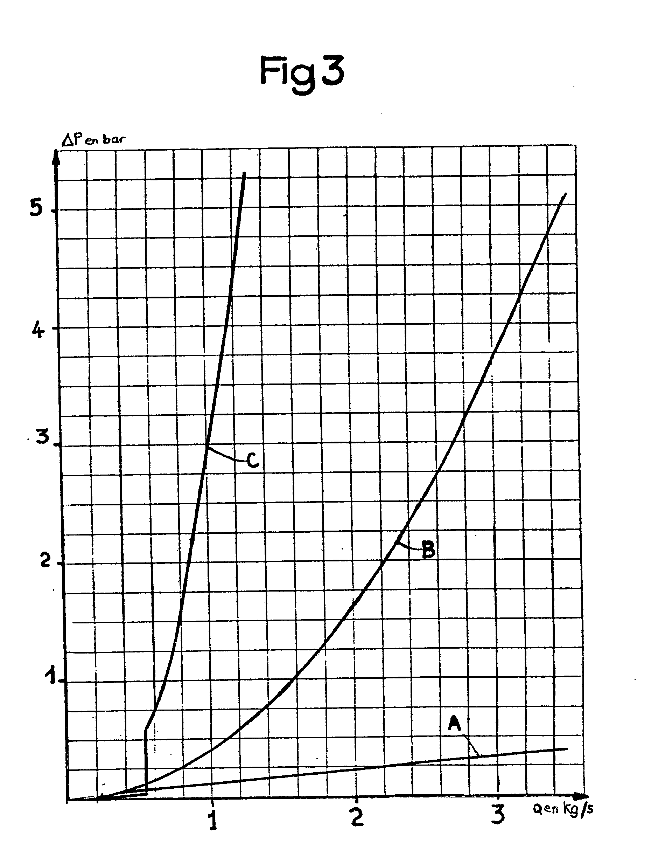

Sur la figure 3, on a représenté un diagramme portant en ordonnée la perte de charge subie par un courant de fluide pendant sa traversée d'un dispositif régulateur et en abscisse le débit dans le dispositif régulateur.

La courbe A représente la caractéristique de perte de charge de type linéaire du courant de commande 2'b dans les canaux 8 de la structure 7 à l'intérieur du tube 6.

La courbe B représente la caractéristique de perte de charge de type quadratique du courant principal 2'a dans sa traversée des plaques percées 2.

Enfin la courbe C représente la caractéristique de perte de charge de l'ensemble du dispositif régulateur représenté aux figures 1 et 2.

On voit en comparant la courbe C aux courbes A et B que la perte de charge du dispositif augmente très rapidement dès que le débit dépasse une certaine valeur. Ceci provient du fait qu'à partir d'un certain seuil de débit la perte de charge linéaire devient inférieure à la perte de charge quadratique, le courant de commande génère alors un vortex entrainant en rotation le courant principal qui passe ensuite par un rétrécissement de veine fluide, ce qui a pour effet d'augmenter la vitesse tangentielle du fluide, et par là-même, la perte de charge globale du système.

Le débit passant dans le dispositif de régulation tel que représenté aux figures 1 et 2 augmente donc rapidement jusqu'à un certain seuil de pression d'admission; au-delà de ceseuil, il reste constant puis ensuite devient faiblement croissant en fonction de l'augmentation de pression.

C'est ainsi que la mise en place d'un tel dispositif dans la chandelle d'un assemblage combustible usagé en stockage interne réduit considérablement le sur-débit du fonctionnement nominal, tout en assurant le débit minimal nécessaire dans le cas du fonctionnement au régime incidentel le plus sévère du réacteur à neutrons rapides.

En se reportant à la figure 3, on voit qu'une augmentation de la surpression de 3 bars (2 à 5 bars) se traduit par une augmentation du débit de 0,9 kg/s à 1,3 kg/s.

La pression et le débit de pompage sont eux-mêmes croissants avec la puissance demandée au réacteur. Le débit est donc bien limité dans ce cas à une valeur suffisamment faible pour ne pas diminuer le rendement du réacteur au régime nominal, tout en assurant le refroidissement nécessaire au stockage interne en régime incidentel.

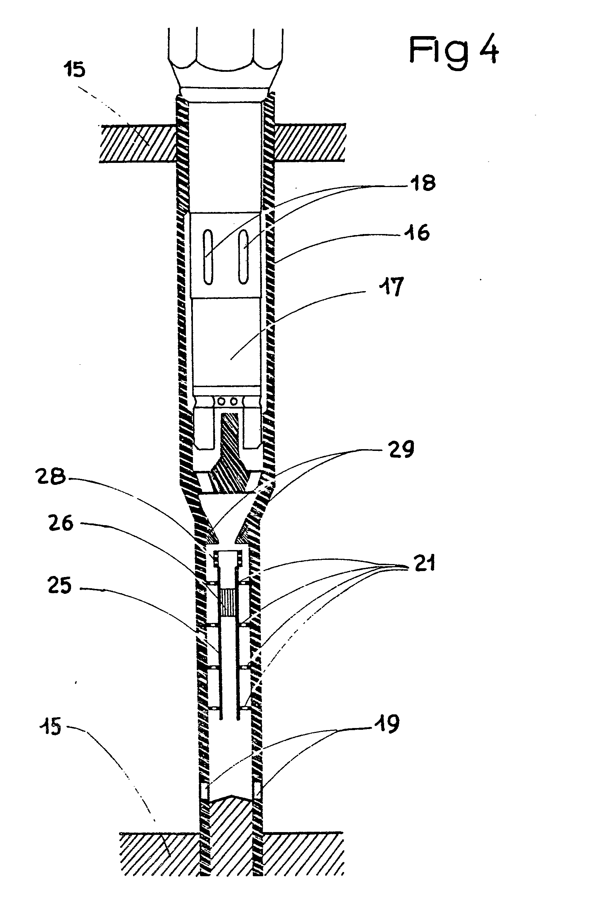

Sur la figure 4, on voit la structure de support de coeur 15 d'un réacteur nucléaire à neutrons rapides dans laquelle sont disposés des tubes supports d'assemblages tels que 16.

La partie inférieure 17 de l'assemblage encore appelée pied de l'assemblage est engagée dans le tube support 16 dans lequel elle vient reposer. Le pied d'assemblage 17 comporte des ouvertures 18 pour le passage du sodium liquide de refroidissement dans l'assemblage.

De la même façon le tube support 16 comportent des ouvertures 19 à leur partie inférieure pour le passage du sodium liquide qui est injecté dans la structure 15 encore appelée platelage par les conduits de sortie des pompes primaires plongeant dans le sodium liquide remplissant la cuve.

Un dispositif régulateur et limiteur de débit suivant l'invention a été disposé dans le tube de support 16 de l'assemblage, entre les ouvertures 19 et la partie inférieure du pied 17 de l'assemblage.

Ce dispositif régulateur de débit comporte quatre plaques perforées 21 de forme circulaire fixées par soudage sur la surface intérieure du tube de support 16. Ces plaques 21 comportent des ouvertures centrales circulaires dans lesquelles est engagé et fixé un tube 25 renfermant une structure 27 créant une perte de charge linéaire dans le courant de sodium liquide parcourant le volume interne du tube 25 séparé en un grand nombre de canaux de faible section longitudinaux limités par la structure 26.

A sa partie supérieure le tube 25 débouche dans une enveloppe cylindrique 28 analogue à l'enveloppe 9 représentée à la figure 1 fermée par un anneau percé de canaux inclinés.

Le courant de sodium liquide pénètrant par les ouvertures 19 et dont la pression est variable en fonction du niveau de puissance du réacteur est séparé à l'intérieur du tube support 16, en un courant principal passant dans l'espace annulaire compris entre la surface intérieure du tube 16 et la surface extérieure du tube 25 et un courant central passant dans le tube 25 puis dans l'enveloppe cylindrique 28, de laquelle ce courant ressort sous forme d'un vortex par les ouvertures prévues à la périphérie de l'enveloppe 28. Ce vortex sert de courant de commande au courant principal de sodium qui a subi des pertes de charge au cours de la traversée des plaques percées 21.

Le courant total passe alors par le rétrécissement 29.

L'interaction du courant principal et du courant de commande produit une limitation et une régulation du débit de sodium, de façon que ce débit reste relativement faible et très faiblement croissant en fonction de la surpression de pompage du sodium dans le platelage 15.

De cette façon, malgré l'utilisation d'un dispositif fixe très peu encombrant sans pièce mobile et très facilement logeable dans le tube support de l'assemblage, on obtient une limitation très efficace et une bonne régulation du débit de sodium dans l'assemblage supporté par le tube 16 qui est un assemblage usagé disposé à la périphérie du cœur où il ne reçoit qu'un faible flux neutronique légèrement croissant, lorsque la puissance demandée au réacteur augmente.

On voit que les principaux avantages du dispositif de régulation de débit suivant l'invention sont de permettre une limitation très efficace du débit pour les différences de pression relatives au régime nominal de fonctionnement du réacteur nucléaire à neutrons rapides et d'assurer le débit minimal pour les faibles différences de pression correspondant au cas de fonctionnement incidentel le plus sévère.

Dans le cas d'un bouchage accidentel complet des canaux longitudinaux (8) de faible section, la régulation de débit respecterait les conditions minimales de refroidissement pour le cas de fonctionnement incidentel du réacteur, et dans le bas du fonctionnement nominal, les assemblages combustibles usagés seraient sur-refroidis au maximum comme ils le sont actuellement.

Le dispositif régulateur est d'une très grande simplicité et peut être facilement logé dans un conduit cylindrique tel qu'un tube de support d'un assemblage combustible d'un réacteur nucléaire à neutrons rapides. Un tel dispositif ne comporte aucune pièce mobile et aucune partie susceptible de se détruire ou de fonctionner de façon défectueuse, lorsqu'elle est plongée dans le sodium liquide de refroidissement remplissant la cuve d'un réacteur nucléaire à neutrons rapides.

L'invention ne se limite pas aux modes de réalisation qui ont été décrits; elle en comporte au contraire toutes les variantes.

C'est ainsi que les dispositifs de perte de charge intercalés sur le courant principal et sur le courant de commande peuvent être d'un type différent de ceux qui ont été décrits.

Lorsqu'on utilise un dispositif à perte de charge linéaire pour le courant de commande, à la partie centrale du régulateur, ce dispositif peut être constitué par une structure quelconque comportant par exemple un ensemble de tubes disposés en faisceaux parallèles ou un empilement de grilles constituant des canaux longitudinaux de faible section.

De la même façon, le dispositif à perte de charge quadratique placé à la périphérie du régulateur et recevant le courant principal de fluide peut être réalisé d'une façon différente de ce qui a été décrit, soit par un ensemble d'un nombre quelconque de plaques comportant des ouvertures alignées ou non alignées ou par une plaque unique comportant des ouvertures calibrées en nombre quelconque.

Le dispositif nécessaire pour produire le vortex et pour diriger le courant de commande vers la partie périphérie du dispositif peut avoir une forme différente de celle qui a été décrite, par exemple comporter des canaux en spirale intercalés entre deux plaques parallèles.

Enfin, le dispositif suivant l'invention s'appliquent dans tous les cas où l'on désire réguler un courant fluide de manière à obtenir, pour une variation de pression faible entre l'entrée et la sortie du dispositif, un débit relativement important, et pour une forte variation de pression, un débit faible et faiblement croissant.

**Revendications**

1. Dispositif de régulation du débit d'un courant de fluide à l'intérieur d'un conduit (1) ayant une extrémité d'entrée (1a) et une extrémité de sortie (1b), comportant un tube (6) fixé coaxialement à l'intérieur dudit conduit (1) et débouchant dans une chambre cylindrique (9) disposée dans le conduit (1) coaxialement par rapport à ce conduit (1) et ménageant des canaux de sortie (12) pour diriger le fluide pénétrant dans ladite chambre cylindrique, à la sortie du tube (6) sous forme d'un courant de commande (2'b) qui est mis en contact avec le courant principal (2'a) du fluide circulant dans le conduit (1) à la périphérie du tube (6), vers un espace périphérique (14) communiquant avec la sortie (1b) du conduit (1) et situé entre la surface latérale externe de ladite chambre cylindrique et la surface latérale interne dudit conduit (1), caractérisé par le fait qu'au moins deux plaques transversales annulaires (2a, 2b) sont fixées par leur bord externe sur la surface intérieure dudit conduit (1), dans des positions espacées axialement et percées chacune d'ouvertures calibrées (3a, 4a; 3b, 4b) entre leur ouverture centrale et leur périphérie fixée sur le conduit, que ledit tube (6) est fixé dans le conduit (1) à l'intérieur desdites ouvertures circulaires centrales desdites plaques et comporte une structure (7) formant des canaux longitudinaux (8) de faible section, une perte de charge de type linéaire étant ainsi créée dans ledit courant de commande (2'b) et une perte de charge de type quadratique étant ainsi créée dans ledit courant principal (2'a), que ladite chambre cylindrique (9) est délimitée à sa périphérie par un anneau (10) coaxial par rapport au conduit (1) et que lesdits canaux (12) traversent l'anneau (10), chacun dans une direction inclinée par rapport à la direction radiale (Or) du conduit (1) joignant le centre du conduit (1) à la sortie du canal (12) sur la périphérie de l'anneau (10), de façon à diriger le fluide pénétrant dans ledit espace périphérique (14) à la sortie de la chambre cylindrique (9) suivant un vortex dont l'axe est confondu avec l'axe du conduit (1) et du tube (6).

2. Dispositif de régulation suivant la revendication 1, dans le cas où le courant de fluide est constitué par du sodium liquide de refroidissement d'un assemblage combustible d'un réacteur nucléaire à neutrons rapides, caractérisé par le fait que le conduit (1) est constitué par le tube support (16) de l'assemblage fixé dans le platelage (15) du réacteur nucléaire.

**Patentansprüche**

1. Vorrichtung zum Regeln eines Fluiddurchflussstroms im Inneren einer Leitung (1) mit einem Eingangsende (1a) und einem Ausgangsende (1b), die ein Rohr (6) aufweist, das koaxial im Inneren der Leitung (1) befestigt ist und in einer zylinderförmigen Kammer (9) mündet, die in der Leitung (1) koaxial bezüglich der Leitung angeordnet ist und in die Auslasskanäle (12) eingearbeitet sind, um das in die zylinderförmige Kammer eindringende Fluid zum Ausgang des Rohres (6) in Form einer Steuerströmung (2'b) zu führen, die mit dem Hauptstrom (2'a) des Fluids in Kontakt zu bringen, das in der Leitung (1) in der Peripherie des Rohres (6) in Richtung auf einen peripheren Raum (14) fliesst, der mit dem Ausgang (1b) der Leitung (1) in Verbindung steht und zwischen der seitlichen äusseren Oberfläche der zylinderförmigen Kammer und der seitlichen Innenfläche der Leitung (1) ausgebildet ist, dadurch gekennzeichnet, dass mindestens zwei transversale ringförmige Platten (2a, 2b) mit ihrem Aussenrand auf der Innenwand der Leitung (1) in Positionen befestigt sind, die axial beabstandet sind und wobei die Platten jeweils mit kalibrierten Öffnungen (3a, 4a; 3b, 4b) zwischen ihrer mittleren Öffnung und ihrem an der Leitung befestigten Rand versehen sind, dadurch, dass das Rohr (6) in der Leitung (1) im Inneren der kreisförmigen mittleren Öffnungen der Platten befestigt ist und eine Struktur (7) aufweist, die Längskanäle (8) mit kleinem Querschnitt bildet, wobei ein linearer Druckverlust somit in dem Steuerstrom (2b) und ein quadratischer Druckverlust in dem Hauptstrom (2a) gebildet wird, dadurch, dass die zylinderförmige Kammer (9) an ihrer Peripherie durch einen Ring (10) begrenzt wird, der bezüglich der Leitung (1) koaxial angeordnet ist und dadurch, dass die Kanäle (12) den Ring (10) durchqueren, wobei jeder in einer Richtung bezüglich der radialen (Or) Richtung der Leitung (1) geneigt ist und die sich in der Mitte der Leitung (1) am Ausgang des Kanals (12) auf der Peripherie des Rings (10) treffen, um das den peripheren Raum (14) durchdringende Fluid am Ausgang der zylinderförmigen Kammer entlang eines Wirbels zu führen, dessen Achse mit der Achse der Leitung (1) und des Rohrs (6) zusammenfällt.

2. Vorrichtung nach Anspruch 1, wobei die Fluidströmung aus flüssigem Kühlmittelnatrium einer Brennelementkassette eines Kernreaktors mit schnellen Neutronen besteht, dadurch gekennzeichnet, dass die Leitung (1) aus dem Trägerrohr (16) der Kassette besteht, das auf dem Boden (15) des Kernreaktors befestigt ist.

**Claims**

1. Device for regulating the rate of a fluid flow within a pipe (1) having an intake end (1a) and a discharge end (1b), having a tube (6) fixed coaxially within said pipe (1) and issuing into a cylindrical chamber (9) located in pipe (1) coaxially with respect thereto and having outlet channels (12) for directing the fluid penetrating said cylindrical chamber to the outlet of tube (6) in the form of a control flow (2'b), which is brought into contact with the main fluid flow (2'a) circulating in pipe (1) at the periphery of tube (6) towards a peripheral space (14) communicating with the outlet (1b) of pipe (1) and located between the outer lateral surface of said cylindrical chamber and the inner lateral surface of said pipe (1), characterized in that at least two annular transverse plates (2a, 2b) are fixed by their outer edge to the inner surface of said pipe (1), in axially spaced positions and each being perforated by calibrated openings (3a, 4a; 3b, 4b) between their central opening and their periphery fixed to the pipe, that said tube (6) is fixed in pipe (1) within said central circular openings of said plates and has a structure (7) forming small cross-section longitudinal channels (8), a linear pressure drop thus being produced in the control flow (2'b) and a quadratic pressure drop being produced in the main flow (2'a), that the said cylindrical chamber (9) is peripherally defined by a ring (10) coaxial with respect to pipe (1) and that said channels (12) traverse ring (10), each in a direction inclined with respect to the radial direction (Or) of the pipe (1) joining the centre of pipe (1) at the outlet of channel (12) to the periphery of ring (10), so as to direct the fluid entering said peripheral space (4) to the outlet of the cylindrical chamber (9) in accordance with a vortex, whose axis coincides with the axis of pipe (1) and the tube (6).

2. Regulating device according to claim 1, in the case where the fluid flow is constituted by liquid cooling sodium for a fuel assembly of a fast neutron nuclear reactor, characterized in that the pipe (1) is constituted by the support tube (16) of the assembly fixed in the nuclear reactor structure (15).

Fig 2

Fig 1

# Fig 3

Fig 4